# EUROPÄISCHE PATENTSCHRIFT

(11) **EP 4 643 720 B1**
(45) Veröffentlichungstag und Bekanntmachung des Hinweises auf die Patenterteilung: **07.10.2026**
(21) Anmeldenummer: 25173630.2
(22) Anmeldetag: 30.04.2025
(51) Int. Cl.: A47J 27/04, A47J 31/44

(54) **DAMPFGARGEFÄSS**
STEAM COOKING VESSEL
RÉCIPIENT DE CUISSON À LA VAPEUR

(30) Priorität: 30.04.2024 AT 503652024
(43) Veröffentlichungstag der Anmeldung: 05.11.2025
(73) Patentinhaber: Greifeneder, Werner, 5020 Salzburg (AT)
(72) Erfinder: Greifeneder, Werner, 5020 Salzburg (AT)
(74) Vertreter: KLIMENT & HENHAPEL

(56) Entgegenhaltungen:
- WO-A1-2007/017342
- DE-A1- 102004 063 278
- KR-Y1- 200 351 375
- US-B2- 11 844 455

## Beschreibung

### GEBIET DER ERFINDUNG

Die Erfindung betrifft ein Dampfgargefäß mit einem schüsselförmigen Gefäßkörper und einem mittels einer Deckeldichtung mit dem Gefäßkörper dicht verbindbaren Deckel, wobei der Deckel zumindest eine Deckelausnehmung aufweist und die zumindest eine Deckelausnehmung dazu ausgebildet ist, um heißen Dampf aus einer externen Dampfquelle in das Dampfgargefäß einzuleiten.

### STAND DER TECHNIK

Die Vorteile des Dampfgarens sind seit langem bekannt. So werden dank der kurzen Garzeiten die Nahrungsmittel im heißen Wasserdampf nicht ausgelaugt, sondern ihre Aromen und der natürliche Geschmack, insbesondere die in den Nahrungsmitteln enthaltenen Vitamine und Mineralstoffe, bleiben erhalten. Grundsätzlich ist zwischen Dampfgaren bei Umgebungsdruck, dem sogenannten "drucklosen" Dampfgaren oder "Dämpfen", und dem Druck-Dampfgaren zu unterscheiden. Beim drucklosen Dampfgaren werden zu garende Lebensmittel dem Dampf von siedendem Wasser bei Umgebungsdruck und einer Gartemperatur von bis zu 100°C ausgesetzt. Das drucklose Dampfgaren eignet sich auch zum Erwärmen bereits vorbereiteter, fertiger Speisen, die beispielsweise gekühlt, insbesondere tiefgekühlt, gelagert wurden.

Beim Druck-Dampfgaren beispielsweise in einem Druckkochtopf werden die zu garenden Lebensmittel gemeinsam mit siedendem Wasser in einem gegenüber der Umgebung druckdicht abgeschlossenen System bei einem Überdruck, der in der Regel auf bis zu 2 bar Absolutdruck, also bis zu 1 bar Überdruck, begrenzt ist, zubereitet. Bei diesem Druck siedet das Wasser bei etwa 120°C. Die höhere Dampftemperatur ist die Ursache für die kürzeren Garzeiten von Druck-Dampfgaren im Vergleich zu Dampfgaren bei Umgebungsdruck.

Das Aufheizen wird stark durch die Kondensation des Dampfes am Gargut verstärkt. Bei der Kondensation wird die freiwerdende Kondensationsenthalpie auf das Gargut übertragen.

Aus dem Stand der Technik sind bereits eine Vielzahl von Dampfgargefäßen bekannt, die bei Umgebungsdruck betrieben werden.

Beispielsweise ist aus der japanischen Druckschrift JP 2006 051069 A ein Behälter zum Aufwärmen von flüssigen Speisen, insbesondere von Suppen, bekannt geworden. Der Behälter weist beispielsweise einen im Wesentlichen zylinderförmigen Topf auf mit einem Deckel, der mit dem Topf dicht verbindbar ist. Der Deckel hat eine Deckelausnehmung mit einer rohrförmigen bzw. zylinderförmigen Dampftülle, die an der Deckelinnenseite befestigt ist. Die Dampftülle ist dabei so konstruiert, dass diese im Betrieb des Behälters bei geschlossenem Deckel in das Behälterinnere bzw. in die darin befindliche flüssige Speise ragt. Zum Aufwärmen der flüssigen Speisen wird eine externe Dampfdüse von außen an die Deckelausnehmung angesteckt, um heißen Dampf mittels der Dampftülle in den Behälter einzublasen. Mehrere Bohrungen, die am unteren bzw. vorderen Ende der Dampftülle angeordnet sind, leiten den heißen Dampf in das flüssige Lebensmittel, wobei dieses erhitzt wird, ohne dass die externe Dampfdüse dazu in das flüssige Lebensmittel eingeführt werden muss. Die Dampfdüse bleibt somit sauber und kommt mit dem im Behälter befindlichen Lebensmittel nicht in Kontakt. Nachteilig bei diesem Behälter ist jedoch, dass dieser aufgrund der weit ins Behälterinnere ragenden Dampftülle ausschließlich zum Wärmen von flüssigen Lebensmitteln, insbesondere von Suppen, geeignet ist. Da die Dampftülle im Betrieb unter das Flüssigkeitsniveau der flüssigen Speisen eintaucht und die zu erwärmenden Lebensmittel durch die Bohrungen hindurch auch in das Innere der mit dem Deckel verbundenen Dampftülle gelangen, ist außerdem die Reinigung des Behälters nach Gebrauch aufwendig.

Aus der DE 10 2004 063 278 A1 ist weiters eine elektrische Vorrichtung zur Erwärmung einer in einem Portionsbehälter befindlichen Speisenportion bekannt, wobei die Vorrichtung eine eigene Dampferzeugungs-Einrichtung zur Erzeugung von heißem Dampf samt einer daran angeschlossenen Dampfdüse umfasst, welche so angeordnet ist, dass die Dampfdüse in einer Betriebsposition durch eine Deckelöffnung des Portionsbehälters hindurch im Inneren des Portionsbehälters positioniert ist, um heißen Dampf in den Portionsbehälter einzublasen. Die Dampfdüse kann wahlweise in einem kurzen Abstand über der Speisenportion enden oder aber in die Speisenportion eingetaucht positioniert werden. Weiters kann der Portionsbehälter relativ zur Dampfdüse bewegt bzw. mit einem Motorantrieb gedreht werden und die Dampfdüse somit in eingetauchter Position wie ein Rührorgan zum Erwärmen von flüssigen Speisen dienen kann. Nachteilig an dieser Ausführung ist zumindest, dass die Vorrichtung aufwendig konstruiert ist, einen hohen Platzbedarf benötigt sowie in der Anschaffung sowie im Betrieb teuer ist. Um beispielsweise rasch und flexibel kleine Speisenportionen für ein oder zwei Personen erhitzen zu können, muss die in die Vorrichtung integrierte Dampferzeugungs-Einrichtung ständig Heißdampf bereitstellen. Für kleinere Küchen oder kleine Gastronomiebetriebe wie Kaffeehäuser, in denen bedarfsweise einzelne Speisenportionen erhitzt werden müssen, ist die aus der DE 10 2004 063 278 A1 bekannte elektrische Vorrichtung daher nicht geeignet.

Vergleichbar mit der Vorrichtung gemäß DE 10 2004 063 278 A1 ist aus der EP 3 165 134 A1 ein ebenfalls aufwendig konstruierter elektrischer Dampfgarer mit einer eigenen Dampferzeugungs-Einrichtung zur Zufuhr von Heißdampf in einem Kochtopf bekannt. Für diesen elektrischen Dampfgarer, der mittels einer eigenen Steuerungselektronik erkennt, ob der Deckel des Kochtopfs geschlossen oder geöffnet ist, gelten ebenfalls dieselben Nachteile, die vorhin bereits zur Vorrichtung gemäß DE 10 2004 063 278 A1 genannt wurden.

Weiters zeigt die chinesische Gebrauchsmusterschrift CN 205458011 U eine Bratpfanne mit einem Pfannengriff und mit einem schüsselförmigen Pfannenboden, wie dieser bei Wok-Pfannen üblich ist. Unter einem "Wok" versteht man eine hohe, durchgehend gewölbte Pfanne, die in der chinesischen sowie der süd- und südostasiatischen Küche zu den wichtigsten Kochutensilien gehört. Die hier gezeigte Wok-Pfanne weist an einer Seite einen schnabelförmigen Ausguss auf, um zubereitete Lebensmittel wie beispielsweise frittiertes Gemüse durch seitliches Kippen aus der Bratpfanne entleeren zu können. Die Bratpfanne weist außerdem einen Pfannendeckel auf, der mittels Befestigungsschrauben an der Bratpfanne fixierbar ist. Der kreisförmige Pfannendeckel schließt die Bratpfanne jedoch nicht dicht ab, sondern lässt jedenfalls eine Ausgussöffnung im Bereich des seitlichen Ausgussschnabels im Pfannenboden offen, wobei der Ausgussschnabel in seitlicher Richtung den Rand des Pfannendeckels überragt. So kann während des Kochvorgangs bereits frittiertes Gargut aus der Pfanne trotz des daran befestigten, geschlossenen Pfannendeckels entleert werden. Zusätzlich weist der Pfannendeckel eine größere Befüllöffnung in Form eines Kreissektors auf, die sich bei aufgesetztem Pfannendeckel an derselben Position befindet wie der schnabelförmige Ausguss der Bratpfanne. Die Befüllöffnung im Pfannendeckel kann mit einem drehbaren Schiebeverschluss geschlossen werden und dient zum Befüllen des Garguts bzw. zum Würzen während des Kochvorgangs. Um beim Kippen und Entleeren der Bratpfanne zu verhindern, dass überlaufendes Gemüse bzw. Gargut durch die Befüllöffnung hindurch aus der Pfanne fällt, wird der Kreissektorförmige Schiebeverschluss im Pfannendeckel geschlossen. Das Gargut wird somit vom geschlossenen Pfannendeckel zurückgehalten und kann die Bratpfanne nur durch die schnabelförmige Ausgussöffnung des Pfannenbodens verlassen, wodurch beim Kippen der Bratpfanne ein schwallartiges Entleeren und Spritzen des Garguts vermieden wird. Für die Zuleitung von Heißdampf ist die aus CN 205458011 U bekannte Bratpfanne jedoch nicht geeignet.

Es besteht insbesondere für kleine Gastronomiebetriebe, wie beispielsweise für Kaffeehäuser, sowie für Profiküchen, in denen flexibel einzelne Speisenportionen rasch und schonend erwärmt werden sollen, weiterhin der Bedarf an einem einfach zu bedienenden, platzsparenden Dampfgargefäß, das die Vorteile des drucklosen Dampfgarens nutzt.

Die KR 200351375 Y1 zeigt eine Bratpfanne umfassend einen die Bratpfanne überdruckfest schließenden Deckel.

Die WO 2007 017342 A1 zeigt eine Vorrichtung zum Dampfgaren umfassend ein röhrenförmiges Element zum Einleiten von Dampf.

Die EP 271 6186 A1 zeigt eine Garvorrichtung umfassend ein Mischungsbehältnis und eine mit diesem Mischungsbehältnis magnetisch verbindbaren Basiseinheit.

### AUFGABE DER ERFINDUNG

Es ist somit Aufgabe der Erfindung, ein möglichst einfach aufgebautes und kostengünstig herstellbares Dampfgargefäß mit einem schüsselförmigen Gefäßkörper und einem damit dicht verbindbaren Deckel bereitzustellen, das die oben genannten Nachteile vermeidet, das vielseitig einsetzbar sowie leicht zu reinigen ist und das in Verbindung mit einer bereits vorhandenen Vorrichtung zur Bereitstellung von heißem Wasserdampf, wie beispielsweise einer Espressomaschine mit einer Dampfdüse, betrieben werden kann.

### DARSTELLUNG DER ERFINDUNG

Zur Lösung der genannten Aufgabe ist erfindungsgemäß ein Dampfgargefäß mit einem schüsselförmigen Gefäßkörper und einem mittels einer Deckeldichtung mit dem Gefäßkörper dicht verbindbaren Deckel vorgesehen, wobei der Deckel zumindest eine Deckelausnehmung aufweist und die zumindest eine Deckelausnehmung dazu ausgebildet ist, um heißen Dampf aus einer externen Dampfquelle in das Dampfgargefäß einzuleiten, wobei am schüsselförmigen Gefäßkörper ein Gefäßgriff sowie am Deckel ein Deckelgriff angeordnet sind, wobei der Gefäßgriff und der Deckelgriff bei geschlossenem Deckel jeweils deckungsgleich zueinander positioniert sind und jeweils an einer Griffseite vom Dampfgargefäß abstehen, und wobei an einer der Griffseite gegenüberliegenden Gelenkseite des Dampfgargefäßes der Deckel mit einem trennbaren Drehgelenk um eine Gelenkachse drehbar beweglich am Gefäßkörper befestigbar ist, wobei die zumindest eine Deckelausnehmung vom Deckelgriff beabstandet am Deckel positioniert ist und im Betrieb des Dampfgargefäßes in der zumindest einen Deckelausnehmung ein Dichtungsstopfen mit einer sich in Richtung zum Innenraum des Dampfgargefäßes konisch verjüngenden Durchgangsbohrung eingesteckt ist.

Auf diese Weise kann ein besonders sicherer Betrieb des Dampfgargefäßes gewährleistet werden.

Ein solcher Dichtungsstopfen innerhalb der zumindest einen Deckelausnehmung dient dazu, individuell geformte Dampfdüsen mit unterschiedlichem Dampflanzendurchmesser, die zum Einleiten von heißem Dampf in den Dichtungsstopfen eingesteckt werden, so abzudichten, dass der heiße Dampf möglichst nicht nach außen entweicht, sondern durch die konische Durchgangsbohrung in den Innenraum des Dampfgargefäßes gelangt. Der Dichtungsstopfen ist vorteilhaft so gestaltet, dass dieser an seiner Außenseite ein Außenprofil aufweist, welches in eingesteckter Lage den Rand der zumindest einen Deckelausnehmung abdichtet. Damit wird gewährleistet, dass der Dichtungsstopfen ortsfest in der zumindest einen Deckelausnehmung feststeckt und nicht verrutscht, wenn eine Dampfdüse bzw. Dampflanze eingesteckt wird. Andererseits kann der Dichtungsstopfen bedarfsweise, beispielsweise zum Reinigen, aus der Deckelausnehmung entnommen werden.

Generell ist unter dem Begriff "Schüssel" ein meist tiefes, rundbauchiges Gefäß zu verstehen, das zum Anrichten, Servieren oder Aufbewahren von Speisen verwendet wird. Der Einsatz eines schüsselförmigen Gefäßkörpers bietet im Zusammenhang mit der gegenständlichen Erfindung den Vorteil, dass der Gefäßkörper - auch schon vor dem eigentlichen Dämpfvorgang - bereits als Rührschüssel zum Zubereiten bestimmter Speisen verwendet werden kann. Beispielsweise können Eiergerichte oder cremige Suppen direkt im schüsselförmigen Gefäßkörper noch gerührt und/oder abgeschmeckt werden, bevor die vorbereiteten Speisenportionen dann anschließend im geschlossenen Dampfgargefäß durch Einleiten von heißem Dampf aus einer externen Dampfquelle wie beispielsweise einer Dampfdüse bzw. Dampflanze einer Espresso-Maschine gedämpft bzw. erhitzt werden.

Definitionsgemäß versteht man unter dem Begriff "im Betrieb des Dampfgargefäßes" die Handhabung des erfindungsgemäßen Dampfgargefäßes mit dem am Gefäßkörper befestigten Deckel, wobei der Deckel in geschlossener Position mittels der Deckeldichtung dicht mit dem Gefäßkörper verbunden ist, sich im Innenraum des Dampfgargefäßes üblicherweise eine zu erwärmende oder bereits erhitzte Speisenportion befindet und in dieser geschlossenen Position das Dampfgargefäß durch die zumindest eine Deckelausnehmung hindurch mit heißem Dampf aus einer externen Dampfquelle, beispielsweise aus einer Dampfdüse bzw. Dampflanze einer Espressomaschine, beaufschlagt werden kann. Da das Dampfgargefäß für das drucklose Dampfgaren bzw. Dämpfen ausgelegt ist, kann im laufenden Betrieb des Dampfgargefäßes das Dampfgargefäß jederzeit auch geöffnet werden, um beispielsweise den aktuellen Garzustand der im Innenraum des Dampfgargefäßes gerade befindlichen Speisenportion beurteilen zu können. Zum Öffnen des Dampfgargefäßes muss bloß der Deckel aufgeklappt werden. In dieser geöffneten Position mit geöffnetem Deckel bzw. mit offenem Innenraum kann in das Dampfgargefäß jedoch kein heißer Dampf eingeleitet werden.

Definitionsgemäß wird unter dem Begriff "Speisenportion" im Zusammenhang mit der gegenständlichen Erfindung jegliche Speise, jegliche Speisenzutat, jegliches Lebensmittel sowie jegliche Flüssigkeit verstanden, die durch Kontakt mit heißem Dampf erhitzt werden kann. So können im erfindungsgemäßen Dampfgargefäß beispielsweise Teigtaschen oder Reisgerichte erwärmt, Fischfilets oder Meeresfrüchte gedämpft, oder diverse Gemüsesorten blanchiert werden. Ebenso können Suppen, Saucen oder Getränke erwärmt werden. Durch das Einbringen von heißem Wasserdampf in das Dampfgargefäß werden die jeweils darin befindlichen Speisenportionen rasch erwärmt.

Vorzugsweise wird heißer Wasserdampf bzw. Heißdampf mit einer Temperatur von rund 120°C bis etwa 150°C verwendet, um die betreffenden Speisenportionen möglichst rasch zu erwärmen, aber gleichzeitig zu verhindern, dass die betreffenden Speisen bei direktem Kontakt mit Heißdampf verbrennen. Der Dampfdruck des heißen Wasserdampfs beträgt bei 120°C etwa 1,985 bar Absolutdruck bzw. etwa 0,985 bar Überdruck. Bei 150°C beträgt der Dampfdruck des heißen Wasserdampfs etwa 4,758 bar Absolutdruck bzw. etwa 3,758 bar Überdruck. Espressomaschinen in der Gastronomie mit einer eigenen Heißdampfdüse stellen heißen Dampf beispielsweise mit rund 2 bar Absolutdruck und einer Temperatur von etwas über 120°C bereit. Die hier verwendeten Bezeichnungen für "heißen Dampf" oder "Heißdampf" betreffen jeweils "heißen Wasserdampf" im vorhin genannten Temperaturbereich von rund 120°C bis rund 150°C, wie dieser von einer externen Dampfquelle wie beispielsweise einer Dampfdüse bzw. Dampflanze einer Espressomaschine bereitgestellt wird. Die Begriffe "Dampfdüse" und "Dampflanze" werden im Weiteren synonym verwendet zur Bezeichnung einer an sich bekannten Dampfdüse, die insbesondere bei in der Gastronomie üblichen Espressomaschinen zur Bereitstellung von Heißdampf, beispielsweise zum Zubereiten von Heißwasser oder zum Aufschäumen von Milch, vorhanden ist.

Da Wasser aufgrund des Phasenübergangs in die Dampfphase eine große Wärmekapazität aufweist, ist die Erhitzung von Speisenportionen mittels Dampfgaren sehr energieeffizient.

Erfindungsgemäß ist am schüsselförmigen Gefäßkörper ein Gefäßgriff angeordnet und ist am Deckel ein Deckelgriff angeordnet, wobei der Gefäßgriff und der Deckelgriff bei geschlossenem Deckel jeweils deckungsgleich zueinander positioniert sind und jeweils an einer Griffseite vom Dampfgargefäß abstehen. Dies hat den Vorteil, dass das Dampfgargefäß besonders komfortabel zu halten, zu öffnen und auch zu schließen ist und der Deckel mit geringem Kraftaufwand dicht verschlossen werden kann. In geschlossener Deckelposition befinden sich der Gefäßgriff und der Deckelgriff in einer Ansicht von oben bzw. in einer Draufsicht auf den Deckel in deckungsgleicher Position zueinander. Der Gefäßgriff und der Deckelgriff sind jeweils so geformt, dass diese beiden Griffteile bei geschlossenem Deckel als ein gemeinsamer Griff des Dampfgargefäßes empfunden werden und von einer Hand des Benutzers umgriffen und gehalten werden können.

In Kombination mit dem trennbaren Drehgelenk, welches an einer der Griffseite gegenüberliegenden Gelenkseite des Dampfgargefäßes angeordnet ist und mit dem der Deckel mit einem um eine Gelenkachse drehbar beweglich am Gefäßkörper befestigbar ist, wird ein besonders praktisches Dampfgargerät bereitgestellt, das für die Zubereitung insbesondere einzelner, kleiner Speisenportionen vorgesehen ist. Das trennbare Drehgelenk ist dabei so ausgeführt, dass der Deckel in einfacher Weise vom Gefäßkörper abgenommen werden kann. Dies kann beispielsweise für Reinigungszwecke des Dampfgargerätes vorteilhaft sein.

Die beiden Griffteile sind vorzugsweise jeweils als lange Stielgriffe oder Langgriffe ausgeführt, die jeweils eine Grifflänge aufweisen, die gleich groß oder größer ist als der Innenradius des schüsselförmigen Gefäßkörpers.

Der am schüsselförmigen Gefäßkörper angeordnete Gefäßgriff kann je nach Ausführung einteilig oder einstückig mit dem Gefäßkörper verbunden sein. Alternativ dazu kann der Gefäßgriff auch als separater Bauteil am Gefäßkörper befestigt, beispielsweise angeklebt, angeschraubt oder angesteckt, sein. Ebenso kann der am Deckel angeordnete Deckelgriff je nach Ausführung einteilig oder einstückig mit dem Deckel verbunden sein. Alternativ dazu kann der Deckelgriff als separater Bauteil am Deckel befestigt sein.

Weitere vorteilhafte Ausgestaltungen der Erfindung sind in den abhängigen Ansprüchen, der nachfolgenden Beschreibung sowie in den Zeichnungen dargelegt. Ferner dienen die im Folgenden verwendeten Positionsangaben von Bauteilen oder Komponenten, wie beispielsweise die Begriffe "oben", "unten", "oberhalb", "unterhalb", "vorne", "hinten", "seitlich", "innerhalb", "außerhalb", "in axialer Richtung", "in radialer Richtung" und dergleichen, im Wesentlichen dem besseren Verständnis der Erfindung, insbesondere in Verbindung mit den nachfolgenden Zeichnungen. Die verwendeten Positionsangaben können sich möglicherweise auf bestimmte Positionen im Betrieb eines erfindungsgemäßen Dampfgargefäßes oder auf einzelnen Ansichten in den Figuren beziehen. In jedem Fall sind solche Positionsangaben dem Fachmann geläufig.

Um im laufenden Betrieb des Dampfgargefäßes beim Einleiten von heißem Dampf einen unerwünschten Überdruck im Innenraum des Dampfgargefäßes zu vermeiden sowie um überschüssigen Heißdampf aus dem Innenraum des Dampfgargefäßes sicher abführen zu können, ist in einer bevorzugten Ausführung bei einem erfindungsgemäßen Dampfgargefäß vorgesehen, dass wahlweise der Deckel eine zweite Deckelausnehmung oder der in die zumindest eine Deckelausnehmung eingesteckte Dichtungsstopfen eine zweite Durchgangsbohrung aufweisen, wobei die zweite Deckelausnehmung oder die zweite Durchgangsbohrung im Dichtungsstopfen jeweils als Überdruckbohrung ausgebildet sind. Eine solche zweite Deckelausnehmung weist einen verhältnismäßig kleineren Durchmesser auf als die erste Deckelausnehmung, die zum Einleiten von heißem Dampf aus einer externen Dampfquelle vorgesehen ist. Ebenso verhält es sich mit dem Größenverhältnis von erster und zweiter Durchgangsbohrung für den Ausführungsfall eines entsprechenden Dichtungsstopfens, in dem zusätzlich eine Überdruckbohrung vorgesehen ist.

Um bei einem erfindungsgemäßen Dampfgargefäß einen besonders komfortabel zu bedienenden, dicht verschließbaren Deckel bereitzustellen, bei dem die Deckeldichtung auch beim Öffnen und Schließen des Deckels nicht verrutscht, weist der Deckel an seinem Deckelrand eine umlaufende Dichtungsnut auf, wobei die Deckeldichtung in Form eines Dichtungsrings mit einem Dichtungsprofil in die umlaufende Dichtungsnut einsteckbar ist. Auf diese Weise wird die sichere Handhabung des Dampfgargefäßes weiter verbessert, da ein unkontrolliertes Austreten von heißem Dampf im Bereich der umlaufenden Deckeldichtung bei geschlossenem Deckel verhindert wird.

In einer ersten Ausführungsform kann bei einem Dampfgargefäß gemäß der Erfindung das trennbare Drehgelenk als Laschenscharnier ausgebildet sein, wobei ein Gelenkvorsprung an einem Gefäßrand des Gefäßkörpers die Gelenkachse bildet, und wobei in befestigter Lage des Deckels am Gefäßkörper eine Gelenklasche am Deckelrand den Gelenkvorsprung drehbar beweglich umgreift. Ein Abschnitt des Gefäßrands des schüsselförmigen Gefäßkörpers ist als Gelenkvorsprung ausgebildet, der sich in Richtung der Gelenkachse des Drehgelenks erstreckt. Eine Gelenklasche am Deckelrand, die komplementär zum Gelenkvorsprung geformt ist, kann durch seitliches Aufschieben bzw. Aufstecken in Richtung der Gelenkachse auf den Gelenkvorsprung aufgesteckt werden. In befestigter Lage des Deckels am Gefäßkörper umgreift die Gelenklasche am Deckelrand den Gelenkvorsprung und bildet ein einfach zu trennendes Drehgelenk aus.

In einer zweiten Ausführungsform kann bei einem Dampfgargefäß gemäß der Erfindung das trennbare Drehgelenk als Eingelenkscharnier ausgebildet sein, wobei ein Gelenkvorsprung am Gefäßrand des Gefäßkörpers in Längsrichtung der Gelenkachse angeordnet ist, und wobei in befestigter Lage des Deckels am Gefäßkörper zwei Gelenklaschenabschnitte einer am Deckelrand angeordneten Gelenklasche den Gelenkvorsprung jeweils an einander gegenüberliegenden Stirnseiten des Gelenkvorsprungs umgreifen, wobei eine Längsbohrung in Richtung der Drehachse sowohl den Gelenkvorsprung, als auch die beiden Gelenklaschenabschnitte durchdringt, und wobei in der Längsbohrung ein Gelenkstift, welcher die Gelenkachse bildet, eingesteckt ist.

Für den Zusammenbau des Drehgelenks wird der Deckel mit seiner am Deckelrand angeordneten Gelenklasche so am Rand des Gefäßkörpers positioniert, dass der Gelenkvorsprung am Gefäßrand zwischen zwei Gelenklaschenabschnitte der am Deckelrand angeordneten Gelenklasche eingesteckt wird, und zwar so, dass die durchgehende Längsbohrung sowohl im Gelenkvorsprung, als auch in den beiden Gelenklaschenabschnitte fluchtend bzw. konzentrisch angeordnet ist. Zum Herstellen der Gelenksverbindung wird in die Längsbohrung ein Gelenkstift, welcher die Gelenkachse bildet, entsprechend eingesteckt. Der Gelenkstift kann beispielsweise aus Kunststoff oder aus Metall gefertigt sein und an einem freien Ende einen Griff, beispielsweise einen Kugelgriff, aufweisen, um die Hantierung des Gelenksstifts zu erleichtern.

Um ein besonders einfach zu handhabendes Dampfgargefäß gemäß der Erfindung bereitstellen zu können, welches spülmaschinenfest, hitzebeständig sowie wärmeisolierend ist, ist es zweckmäßig, wenn der Gefäßkörper und der Deckel aus einem lebensmittelechten Duroplast-Kunststoff hergestellt sind. Aufgrund der hervorragenden wärmeisolierenden Eigenschaften von Duroplast-Kunststoff im Vergleich zu Metall - die Wärmeleitung in Duroplast-Kunststoff ist etwa um den Faktor 300 bis 1000 geringer als in Metallwerkstoffen - bietet ein solches Dampfgargefäß aus Kunststoff den Vorteil, dass die mittels Heißdampf in die zu erhitzende Speisenportion eingebrachte Wärmekapazität möglichst verlustfrei zu einer entsprechenden Temperaturerhöhung der betreffenden Speisenportion im Inneren des Dampfgargefäßes führt. Anders als bei Dampfkochtöpfen aus Metall, die zuerst erwärmt werden müssen, bevor die darin befindlichen Speisen erhitzt werden, erfolgt im vorliegenden Fall bei einem Dampfgargefäß aus Duroplast-Kunststoff die Erwärmung der Speisenportionen sehr energieeffizient.

Um im Betrieb des Dampfgargefäßes ein unkontrolliertes Austreten von Heißdampf zu vermeiden, kann es außerdem vorteilhaft sein, wenn der Dichtungsstopfen und die Deckeldichtung aus Silikon hergestellt sind. Profilierte Dichtungen aus lebensmittelechtem Silikon haben sich bereits als Topfdichtungen von Kochtöpfen, beispielsweise bei Druckkochtöpfen, bewährt. Silikondichtungen sind ebenfalls spülmaschinenfest, hitzebeständig und wärmeisolierend und bieten daher, insbesondere gemeinsam mit einem Gefäßkörper und Deckel aus Duroplast-Kunststoff, den Vorteil, dass die wesentlichen Komponenten des erfindungsgemäßen Dampfgargefäßes aus leichten, wärmeisolierenden sowie robusten Materialien hergestellt sind. Silikondichtungen sind dauerelastisch und bieten überdies den Vorteil, dass die elastische Deckeldichtung beim Schließen des Deckels eine Art von "Feder-Effekt" bewirkt. Der Benutzer spürt beim gemeinsamen Festhalten von Gefäßgriff und Deckelgriff aufgrund eines federnden Widerstands der elastischen Silikon-Deckeldichtung, ob der Deckel dicht am Gefäßrand des Gefäßkörpers anliegt.

Zusammenfassend sind die genannten Materialien Duroplast-Kunststoff für den Gefäßkörper und den Deckel sowie Silikon für die Dichtungen, also den Dichtungsstopfen und die Deckeldichtung, besonders pflegeleicht und hygienisch. Das Dampfgargefäß besteht insgesamt nur aus wenigen Einzelteilen, die erforderlichenfalls einzeln gereinigt oder einzeln ausgetauscht werden können.

In einer ersten Weiterbildung der Erfindung kann ein System umfassend ein erfindungsgemäßes Dampfgargefäß samt einem Standring bereitgestellt werden, wobei ein Profilabschnitt des Standrings komplementär zu einem Außenflächenabschnitt des schüsselförmigen Gefäßkörpers geformt ist. In dieser Variante der Erfindung bilden das Dampfgargefäß und der zugehörige Standring ein System oder Set, welches die Handhabung weiter erleichtert. So kann der schüsselförmige Gefäßkörper für sich alleine mit dem zugehörigen Standring als Rührschüssel beispielsweise zum Schlagen von Rühreiern oder von Eischnee verwendet werden, wobei der Gefäßkörper dank der Lagerung auf dem Standring auch rotiert oder schräg positioniert werden kann. Der Standring dient also dazu, die Standfestigkeit des Gefäßkörpers bzw. des gesamten Dampfgargefäßes weiter zu erhöhen.

In einer zweiten Weiterbildung der Erfindung kann ein System umfassend ein erfindungsgemäßes Dampfgargefäß samt einem Dämpfeinsatz mit einem Siebboden bereitgestellt werden, wobei der Dämpfeinsatz so geformt ist, dass dieser in das Dampfgargefäß einsetzbar ist. Ein solcher Dämpfeinsatz bietet den Vorteil, dass Speisenportionen wie Fischfilets, Meeresfrüchte, Reisgerichte, Teigwaren oder Gemüse auf dem Siebboden des Dämpfeinsatzes aufgelegt werden können und Kondenswasser, das sich beim Einleiten von heißem Dampf im Inneren des Dampfgargefäßes bildet, durch den Siebboden hindurch abtropfen kann, ohne die auf dem Dämpfeinsatz befindlichen Speisenportionen übermäßig zu befeuchten oder zu durchnässen. Entsprechende Handgriffe am Dämpfeinsatz ermöglichen ein komfortables Hantieren des Dämpfeinsatzes gegebenenfalls samt den darauf befindlichen Speisenportionen. Der Dämpfeinsatz ist so geformt, dass dieser bei geöffnetem Deckel einfach in das Dampfgargefäß hineingestellt werden kann. Die Handgriffe ermöglichen auch eine komfortable Entnahme des Dämpfeinsatzes gegebenenfalls samt einer darauf befindlichen Speisenportion nach Abschluss des Garvorgangs. Der Dämpfeinsatz ist somit wiederverwendbar und kann beispielsweise aus Duroplast-Kunststoff hergestellt sein.

In einer dritten Weiterbildung der Erfindung kann ein System umfassend ein erfindungsgemäßes Dampfgargefäß samt einem Dampfeinblasadapter bereitgestellt werden. Der Dampfeinblasadapter weist einen konisch geformten Trichterabschnitt mit einem freien Trichterende zum Einstecken einer Dampfdüse auf samt einem an den konischen Trichterabschnitt anschließenden Schlauchabschnitt, welcher dazu ausgebildet ist, um durch die Deckelausnehmung hindurch heißen Dampf aus einer externen Dampfquelle wie beispielsweise einer Espressomaschine in das Dampfgargefäß einzuleiten. Ein solcher Dampfeinblasadapter ermöglicht es, heißen Dampf zum Dampfgaren in das Dampfgargefäß einzuleiten aus Dampfdüsen bzw. Dampflanzen, die beispielsweise aufgrund ihrer Bauweise oder ihrer Anordnung dazu nicht oder nur eingeschränkt verwendet werden können. So können beispielsweise Dampfdüsen oder Dampflanzen mit zu großem Außendurchmesser, der zu groß für die zumindest eine Deckelausnehmung ist, in den konischen Trichterabschnitt des Dampfeinblasadapters eingesteckt werden. Der heiße Dampf kann dann im Inneren des Dampfeinblasadapters durch den Schlauchabschnitt hindurch in das Dampfgargefäß geleitet werden, ohne dass dabei heißer Dampf austritt. Ebenso können beispielsweise Dampflanzen, die schlecht zugänglich positioniert sind, mittels des Dampfeinblasadapters "verlängert" werden, um die sichere Handhabung beim Einblasen von heißem Dampf in das Dampfgargefäß zu verbessern. Der Dampfeinblasadapter ist vorzugsweise aus elastischem, hitzebeständigem Silikon hergestellt. Als weiterer Vorteil ist zu nennen, dass nur der Schlauchabschnitt des Dampfeinblasadapters beim Erhitzen mit den Speisenportionen in Kontakt kommen kann, nicht jedoch die entsprechende Dampfdüse oder Dampflanze der Espressomaschine, an der der Dampfeinblasadapter befestigt ist. Dies erleichtert die hygienische Reinigung und ermöglicht einen raschen und flexiblen Wechsel, um mit ein und derselben Dampfdüse oder Dampflanze sowohl Speisenportionen im erfindungsgemäßen Dampfgargefäß erhitzen zu können, als auch beispielsweise Heißdampf für die Zubereitung von Teegetränken mit der Espressomaschine zur Verfügung zu haben. Zur raschen und sicheren Befestigung des Dampfeinblasadapters an der entsprechenden Dampfdüse bzw. Dampflanze ist vorteilhaft eine Dichtungsmanschette mit einem Verschluss, beispielsweise einem Klettverschluss vorgesehen.

In einer vierten Weiterbildung der Erfindung kann ein System umfassend ein erfindungsgemäßes Dampfgargefäß samt einer Espressomaschine mit einer Dampfdüse bereitgestellt werden, wobei die Dampfdüse dazu ausgebildet ist, um heißen Dampf zum Einleiten in das Dampfgargefäß bereitzustellen. Je nach Baugröße und Bauform der Dampfdüse kann es zweckmäßig sein, zum Einleiten des heißen Dampfs in das Dampfgargefäß gegebenenfalls einen Dampfeinblasadapter zu verwenden, der an der Dampfdüse befestigt ist und als "Verlängerung" der betreffenden Dampfdüse bzw. Dampflanze dient. Das Einleiten von heißem Dampf durch die Deckelausnehmung im Deckel des Dampfgargefäßes hindurch in seinen Innenraum kann also wahlweise direkt mittels der Dampfdüse erfolgen, oder indirekt mittels eines Dampfeinblasadapters, der als Verlängerung an der Dampfdüse befestigt ist.

Im Rahmen der Erfindung können eines oder mehrere der vorgenannten Systeme selbstverständlich auch miteinander kombiniert werden. So ist es beispielsweise möglich, ein erfindungsgemäßes Dampfgargefäß als Set mit zumindest einem oder mit mehreren Standringen, mit zumindest einem oder mit mehreren Dämpfeinsätzen, und/oder mit zumindest einem oder mit mehreren Dampfeinblasadaptern bereitzustellen. Ebenso ist es im Rahmen der Erfindung vorgesehen, ein erfindungsgemäßes Dampfgargefäß als Set mit einer Espressomaschine bereitzustellen.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken darlegen.

Es zeigen:
- **Fig. 1**: in einer Schnittansicht von der Seite eine erste Ausführungsform eines erfindungsgemäßen Dampfgargefäßes mit geschlossenem Deckel;
- **Fig. 2**: in einer Schnittansicht von der Seite das in Fig. 1 gezeigte Dampfgargefäß mit leicht geöffnetem Deckel samt einem Standring zum Abstellen des Dampfgargefäßes;
- **Fig. 3**: in einer Schnittansicht von der Seite eine zweite Ausführungsform eines erfindungsgemäßen Dampfgargefäßes mit geschlossenem Deckel sowie mit angesteckter Dampfdüse;
- **Fig. 4**: in einer Schnittansicht von der Seite das in Fig. 3 gezeigte Dampfgargefäß mit geschlossenem Deckel sowie mit angestecktem Dampfeinblasadapter;
- **Fig. 5**: in einer Draufsicht von oben das in Fig. 3 gezeigte Dampfgargefäß mit geschlossenem Deckel ohne externe Dampfdüse;
- **Fig. 6**: eine vergrößerte Detailansicht gemäß des in Fig. 4 markierten Ausschnitts A;
- **Fig. 7**: in einer isometrischen Ansicht seitlich von oben ein Detail eines trennbaren Drehgelenks mit einem Gelenkstift;
- **Fig. 8**: in einer teilweisen Schnittansicht von oben ein Detail des in Fig. 7 gezeigten Drehgelenks;
- **Fig. 9**: in einer isometrischen Ansicht schräg von oben ein Detail einer ringförmigen Deckeldichtung;
- **Fig. 10**: in einer Schnittansicht von der Seite ein Detail eines Dampfeinblasadapters mit einer ersten externen Dampfdüse sowie - alternativ - mit einer zweiten externen Dampfdüse, die noch nicht in Verbindung mit dem Dampfeinblasadapter steht;
- **Fig. 11**: in einer Schnittansicht von der Seite den in Fig. 10 gezeigten Dampfeinblasadapter mit einer ersten externen Dampfdüse;
- **Fig. 12**: in einer isometrischen Ansicht schräg von der Seite einen Dämpfeinsatz.

### WEGE ZUR AUSFÜHRUNG DER ERFINDUNG

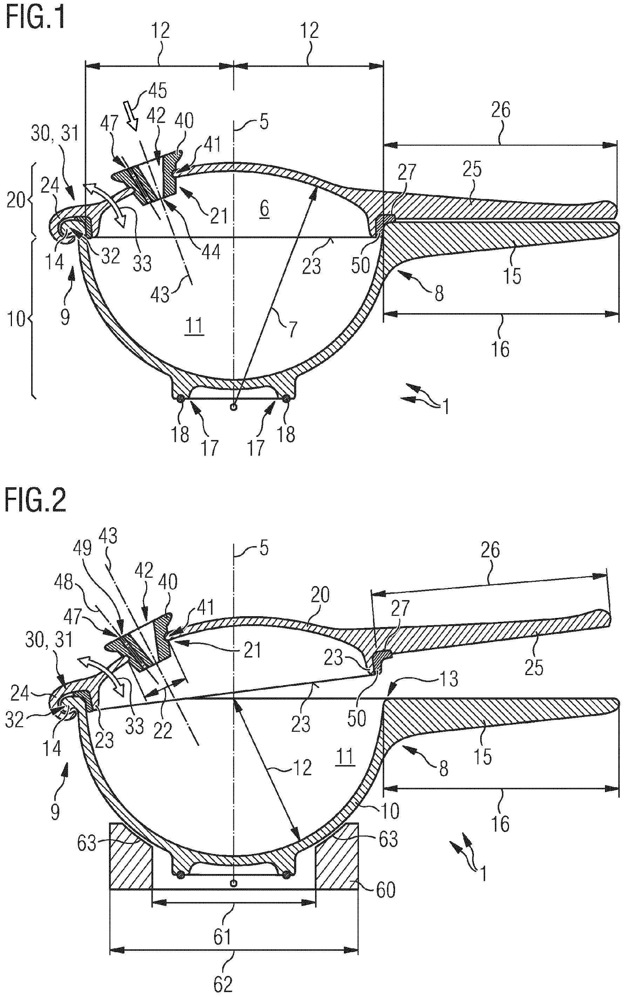

**Fig. 1** zeigt eine erste Ausführungsform eines erfindungsgemäßen Dampfgargefäßes 1 in einer geschlossenen Position. Die nun folgende Beschreibung bezieht sich gleichermaßen auf **Fig. 1** und **Fig. 2****.** Das Dampfgargefäß 1 weist hier einen im Wesentlichen um eine Rotationsachse 5 rotationssymmetrisch geformten Innenraum 6 auf, welcher Innenraum 6 glatte Oberflächen aufweist, die einfach und hygienisch zu reinigen sind. Das Dampfgargefäß 1 umfasst einen schüsselförmigen Gefäßkörper 10 mit einem Innenraum 11 des Gefäßkörpers 10, der als Rührschüssel zum Zubereiten von Speisen verwendet werden kann. Der Innenraum 11 des Gefäßkörpers 10 ist hier beispielsweise in Form einer Halbkugel geformt und weist einen Innenradius 12 sowie einen Gefäßrand 13 auf. An einer Griffseite 8 ist am Gefäßkörper 10 ein Gefäßgriff 15 angeordnet. An einer der Griffseite 8 gegenüberliegenden Gelenkseite 9 ist am Gefäßrand 13 des Gefäßkörpers 10 ein Gelenkvorsprung 14 ausgebildet. Der Gefäßgriff 15 ist hier als Stielgriff ausgebildet mit einer Grifflänge 16, die beispielsweise größer ist als der Innenradius 12 des Gefäßkörpers 10. An seiner unteren Außenseite weist der schüsselförmige Gefäßkörper 10 eine Standfläche 17 mit einem Sockelring 18 auf. Der Sockelring 18 ist hier beispielsweise aus einem rutschfesten Kunststoff, insbesondere aus Silikon, hergestellt.

Ein gewölbter Deckel 20 zum Verschließen des Dampfgargefäßes 1 weist in der in Fig. 1 gezeigten geschlossenen Position einen Innenradius 7 auf, welcher die Größe des Innenraums des geschlossenen Dampfgargefäßes 1 bestimmt. Der Deckel 20 weist eine erste Deckelausnehmung 21 auf, die als Durchgangsbohrung ausgeführt ist und einen Durchmesser 22 hat. Die Deckelausnehmung 21 ist dazu ausgebildet, um heißen Dampf 45 aus einer externen Dampfquelle, beispielsweise aus einer Dampfdüse einer Espressomaschine, in das Dampfgargefäß 1 einzuleiten. Der Deckel 20 hat weiters einen Deckelrand 23, wobei an der Gelenkseite 9 ein Abschnitt des Deckelrands 23 als Gelenklasche 24 ausgeführt ist. An der der Gelenkseite 9 gegenüberliegenden Griffseite 8 ist ein Deckelgriff 25 angeordnet mit einer Grifflänge 26, welche im Wesentlichen der Grifflänge 16 des Gefäßgriffs 15 entspricht. Der Deckel 27 weist an seinem Deckelrand 23 eine umlaufende Dichtungsnut 27 auf, in welche eine Deckeldichtung 50 eingesteckt ist. Fig. 1 zeigt den Deckel 20 in geschlossener Lage, wobei der umlaufende Ringspalt zwischen dem Deckelrand 23 und dem Gefäßrand 23 mittels der dazwischen angeordneten Deckeldichtung 50 dampfdicht abgedichtet ist.

Der Gefäßgriff 15 am schüsselförmigen Gefäßkörper 10 sowie der Deckelgriff 25 am Deckel 20 sind so angeordnet, dass der Gefäßgriff 15 und der Deckelgriff 25 bei geschlossenem Deckel 20 jeweils deckungsgleich zueinander positioniert sind und jeweils an derselben Griffseite 8 vom Dampfgargefäß 1 abstehen. Die beiden Griffteile 15,25 sind dabei so gestaltet, dass sie in geschlossener Position des Dampfgargefäßes 1 einen gemeinsamen Stielgriff bilden und bequem und sicher von einer Hand eines Benutzers gemeinsam umgriffen werden können. An der der Griffseite 8 gegenüberliegenden Gelenkseite 9 des Dampfgargefäßes 1 ist der Deckel 20 mit einem trennbaren Drehgelenk 30, das hier beispielsweise in Form eines Laschenscharniers 31 ausgebildet ist, um eine Gelenkachse 32 drehbar beweglich 33 am Gefäßkörper 10 befestigt. Das Drehgelenk 30 ist dabei so ausgebildet, dass der Deckel 20 in komplett geöffneter, aufgeklappter Position beispielsweise durch seitliches Verschieben in Richtung der Gelenkachse 32 relativ zum Gefäßkörper 10 von diesem getrennt werden kann. Der Doppelpfeil 33 symbolisiert eine Drehrichtung 33 des Deckels 33 um die Gelenkachse 32.

**Fig. 2** zeigt das in Fig. 1 dargestellte Dampfgargefäß 1 mit in Drehrichtung 33 leicht geöffnetem, aufgeklapptem Deckel 20 samt einem Standring 60 zum Abstellen des Dampfgargefäßes 1.

In der ersten Deckelausnehmung 21 des Deckels 20 ist ein Dichtungsstopfen 40 eingesteckt. Wie vorhin bereits erwähnt, ist die Deckelausnehmung 21 dazu ausgebildet, um heißen Dampf 45 aus einer externen Dampfquelle, vorzugsweise einer Dampfdüse einer Espressomaschine, in das Dampfgargefäß 1 einzuleiten. Die Deckelausnehmung 21 weist einen Durchmesser 22 auf. Der Dichtungsstopfen 40 dient zum Abdichten einer externen Dampfdüse, die zum Einleiten von Heißdampf in die Deckelausnehmung 21 eingesteckt wird. Ein Außenprofil 41 mit einer außenseitigen Profilierung bzw. Ausnehmung, die komplementär zur Deckelausnehmung 21 ist, sichert den Dichtungsstopfen 40 in seiner eingesteckten Lage innerhalb der Deckelausnehmung 21. Der hier gezeigte Dichtungsstopfen 40 ist aus einem hitzebeständigen, lebensmittelechten Silikonkunststoff hergestellt. Erforderlichenfalls kann der Dichtungsstopfen 40 zur Reinigung oder zum Tausch aus der Deckelausnehmung 21 herausgenommen werden. Der Dichtungsstopfen 40 weist eine Durchgangsbohrung 42 mit einer Bohrungsachse 43 auf, wobei sich die Durchgangsbohrung 42 in Richtung zum Innenraum 6 des Dampfgargefäßes 1 gesehen konisch verjüngt. In Betriebsposition, also in eingesteckter Lage innerhalb der Deckelausnehmung 21, weist die konische Durchgangsbohrung 42 an ihrem freien Ende zum Innenraum 6 hin einen kleinsten Bohrungsdurchmesser 44 auf, der zweckmäßig so gewählt ist, dass dieser etwas kleiner dimensioniert ist als ein Durchmesser einer externen Dampfquelle, beispielsweise einer Dampflanze bzw. Dampfdüse einer Espressomaschine. Somit wird gewährleistet, dass bei der Heißdampfzufuhr 45, wenn also eine Dampfdüse als externe Dampfquelle in die konische Durchgangsbohrung 42 eingesteckt ist, der Dichtungsstopfen 40 verhindert, dass heißer Dampf nach außen entweicht, sondern durch die konische Durchgangsbohrung 42 hindurch in den Innenraum 6 des Dampfgargefäßes 1 gelangt.

Bei der in den Figuren 1 und 2 gezeigten Ausführung weist der Dichtungsstopfen 40 eine zweite Durchgangsbohrung 47 mit einer Bohrungsachse 48 und einem Bohrungsdurchmesser 49 auf, wobei die zweite Durchgangsbohrung 47 als Überdruckbohrung ausgebildet ist, um im Betrieb überschüssigen Heißdampf aus dem Innenraum 6 des Dampfgargefäßes 1 abzuführen. Damit wird ein sicherer Betrieb des Dampfgargefäßes 1 sowie ein druckloses Garen bei Umgebungsdruck gewährleistet.

In Fig. 2 ist weiters ein Standring 60 dargestellt, der gemeinsam mit dem erfindungsgemäßen Dampfgargefäß 1 ein Set bildet. Der Standring 60 weist einen Innendurchmesser 61, einen Außendurchmesser 62 sowie einen Profilabschnitt 63 auf, wobei der Profilabschnitt 63 des Standrings 60 komplementär zu einem Außenflächenabschnitt des schüsselförmigen Gefäßkörpers 10 geformt ist. Der Innendurchmesser 61 ist etwas größer gewählt als der Durchmesser der Standfläche 17 mit dem Sockelring 18. Mittels des untergelegten Standrings 60 wird nicht nur die Standfläche des Dampfgargefäßes 1 vergrößert, sondern der schüsselförmige Gefäßkörper 10 lässt sich auch relativ zum Standring 60 drehen und in seitlicher Richtung etwas schwenken. Der Gefäßkörper 10 für sich kann ohne Deckel 20 oder mit geöffnetem Deckel 20 auch als Rührschüssel zur Zubereitung von Speisen verwendet werden, die anschließend - bei geschlossenem Deckel 20 - im Innenraum des geschlossenen Dampfgargefäßes 1 durch Heißdampfzufuhr gedämpft bzw. erhitzt werden können. Im Set mit dem Standring 60 kann das Dampfgargefäß 1 somit in vorteilhafter Weise besonders flexibel verwendet werden. Der hier gezeigte Standring 60 ist beispielsweise aus rutschfestem Silikon gefertigt.

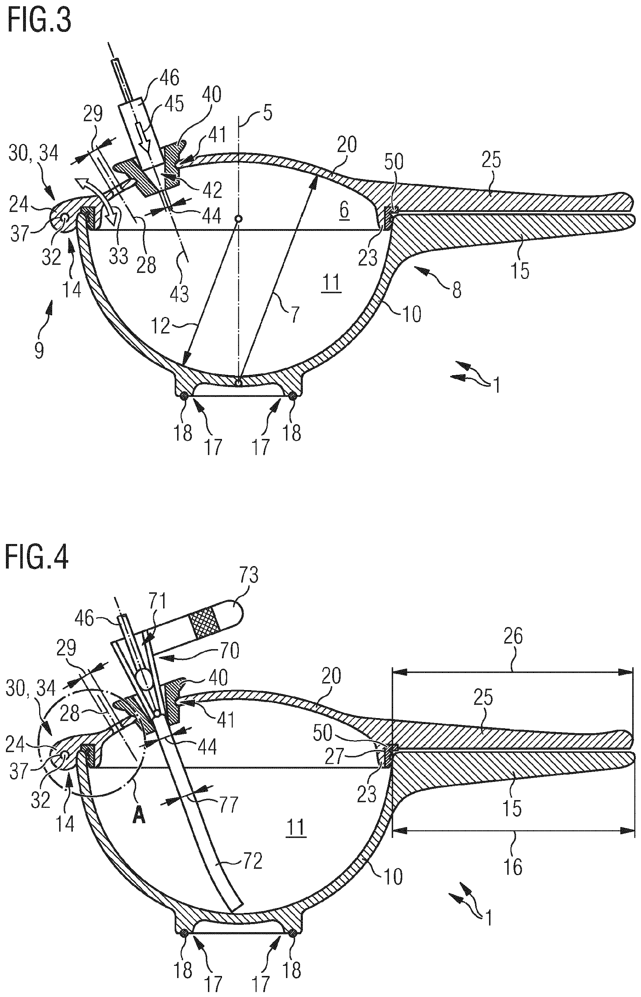

**Fig. 3** zeigt eine zweite Ausführungsform eines erfindungsgemäßen Dampfgargefäßes 1 mit geschlossenem Deckel 20 während der Zufuhr 45 von Heißdampf mit einer angesteckten Dampfdüse 46 bzw. Dampflanze einer Espressomaschine. Gleiche oder vergleichbare bzw. funktionsgleiche Bauteile werden hier und im Weiteren jeweils mit denselben Bezugszeichen bezeichnet wie zuvor bei der in den Figuren 1 und 2 veranschaulichten ersten Ausführungsform des Dampfgargefäßes 1. Ebenso wie bei dem in Fig. 1 gezeigten Dampfgargefäß 1 sind auch hier in Fig. 3 wiederum der Gefäßkörper 10 und der Deckel 20 aus einem Duroplast-Kunststoff hergestellt sowie der Dichtungsstopfen 40 und die Deckeldichtung 50 aus Silikon hergestellt.

Im Folgenden wird daher nur auf Unterschiede zwischen der ersten und der hier in Fig. 3 gezeigten zweiten Ausführungsform eingegangen.

Der Deckel 20 weist in Fig. 3 neben der ersten Deckelausnehmung 21, in der ein Dichtungsstopfen 40 zur Aufnahme einer Dampfdüse 46 für die Zufuhr 45 von Heißdampf steckt, eine weitere, zweite Deckelausnehmung 28 auf, welche als Überdruckbohrung ausgebildet ist, um im Betrieb überschüssigen Heißdampf aus dem Innenraum 6 des Dampfgargefäßes 1 abzuführen. Die zweite Deckelausnehmung 28 weist einen Durchmesser 29 auf. Im Unterschied zu dem in den Figuren 1 und 2 gezeigten Dichtungsstopfen 40 fehlt bei dem in Fig. 3 gezeigten Dichtungsstopfen 40 eine solche Überdruckbohrung.

Wahlweise weist also der gewölbte Deckel 20 entweder eine zweite Deckelausnehmung 28 auf, wie dies in Fig. 3 gezeigt ist, oder der in die erste Deckelausnehmung 21 eingesteckte Dichtungsstopfen 40 weist eine zweite Durchgangsbohrung 47 auf, wie dies in Fig. 1 gezeigt ist. Sowohl die zweite Deckelausnehmung 28, als auch die zweite Durchgangsbohrung 47 im Dichtungsstopfen 40 sind jeweils als Überdruckbohrung ausgebildet, um im Betrieb überschüssigen Heißdampf aus dem Innenraum 6 des Dampfgargefäßes 1 abzuführen. Die Überdruckbohrungen sind jeweils so am Deckel 20 oder im Dichtungsstopfen 40 positioniert, dass diese vom Handgriff 15,25 beabstandet sind und in schräger Richtung von diesem weg weisen. Im Falle von austretendem Heißdampf durch die Überdruckbohrung wird so verhindert, dass der Handgriff 15,25 heiß wird bzw. austretender heißer Dampf gegebenenfalls die am Handgriff 15,25 befindliche Hand eines Benutzers verletzen könnte.

Weiters ist der in Fig. 3 gezeigte Deckel 20 mittels eines sogenannten Eingelenkscharniers 34 mit dem Gefäßkörper 10 verbunden. Zur genauen Beschreibung der Funktionsweise dieses trennbaren Drehgelenks 30 wird auf die nachfolgende Beschreibung verwiesen.

**Fig. 4** zeigt das in Fig. 3 dargestellte Dampfgargefäß 1 mit geschlossenem Deckel 20 sowie mit einem Dampfeinblasadapter 70, der durch den Dichtungsstopfen 40 in der ersten Deckelausnehmung 21 hindurch in den Innenraum des Dampfgargefäßes 1 eingesteckt ist. Der Dampfeinblasadapter 70 ist hier beispielsweise aus einem hitzebeständigen Silikon hergestellt und hat einen konisch geformten Trichterabschnitt 71 mit einem daran anschließenden Schlauchabschnitt 72, der dazu ausgebildet ist, um durch die erste Deckelausnehmung 21 hindurch heißen Dampf 45 aus einer externen Dampfquelle 46, beispielsweise einer Dampfdüse 46 einer Espressomaschine, in das Dampfgargefäß 1 einzuleiten. Der konische konischer Trichterabschnitt 71 dient dazu, dass auch solche Dampfdüsen 46, deren Querschnitt an sich zu groß ist zum direkten Anstecken in die erste Deckelausnehmung 21 oder in den Dichtungsstopfen 40, zum Einleiten von Heißdampf in das Dampfgargefäß 1 verwendet werden können. Eine Dichtungsmanschette 73, die an einem freien Ende 74 des konischen Trichterabschnitts 71 angebracht ist, und die beispielsweise einen Verschluss 76 in Form eines Klettverschlusses aufweist, dient zum Abdichten der eingesteckten Dampfdüse 46. Der Schlauchabschnitt 72 dient als Verlängerung des Trichterabschnitts 71 in Richtung seiner Achse 75 und weist einen Außendurchmesser 77 auf, der etwas größer ist als der kleinste Bohrungsdurchmesser 44 der konischen Durchgangsbohrung 42 des Dichtungsstopfens 40. Somit ist der eingesteckte Schlauchabschnitt 72 gegenüber dem Dichtungsstopfen 40 dampfdicht abgedichtet. Vorteilhaft kommt beim Einleiten von Heißdampf 45 nur der Schlauchabschnitt 72 mit dem zu erhitzenden Lebensmittel im Innenraum des Dampfgargefäßes 1 in Kontakt. Für den Einsatzfall, dass beispielsweise eine Suppe oder eine Flüssigkeit erhitzt werden soll, so kann der Schlauchabschnitt 72 so weit in den Innenraum 11 des Gefäßkörpers 10 eingetaucht werden, dass der Heißdampf unterhalb des Flüssigkeitsspiegels direkt in die Flüssigkeit eingeleitet wird. Im Fall des Erhitzens von festen Speisenportionen, beispielsweise beim Dämpfen von Fischfilets, wird der Schlauchabschnitt 72 in zweckmäßiger Weise nur so weit in den Innenraum 6 des Dampfgargefäßes 1 eingeführt, dass sein vorderes bzw. unteres freies Schlauchende vom Dichtungsstopfen 40 festgeklemmt und abgedichtet werden kann. Die feste Speisenportion kommt dabei mit dem vorderen freien Ende des Schlauchabschnitts 72 nicht in Berührung.

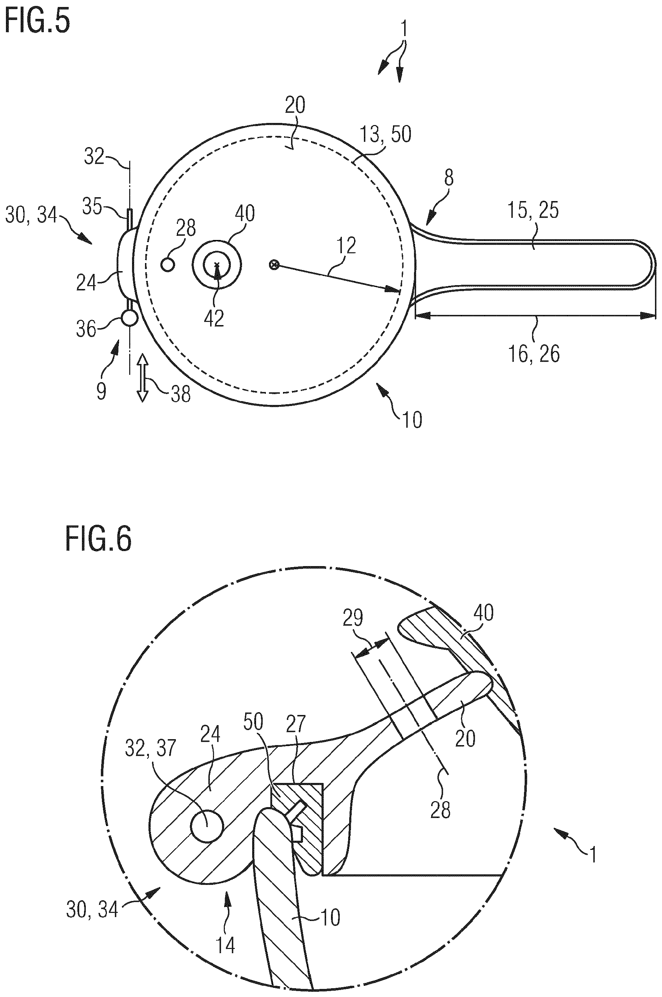

**Fig. 5** zeigt von oben das in Fig. 3 gezeigte Dampfgargefäß 1 mit geschlossenem Deckel 20 ohne externe Dampfdüse. Hier ist gut zu erkennen, dass am schüsselförmigen Gefäßkörper 10 der Gefäßgriff 15 sowie am Deckel 20 der Deckelgriff 25 so angeordnet sind, dass die beiden Griffteile 15,25 bei geschlossenem Deckel 20 jeweils deckungsgleich zueinander positioniert sind und jeweils an einer Griffseite 8 vom Dampfgargefäß 1 abstehen. An der der Griffseite 8 gegenüberliegenden Gelenkseite 9 des Dampfgargefäßes 1 ist der Deckel 20 mit einem trennbaren Drehgelenk 30, das um eine Gelenkachse 32 drehbar beweglich 33 ist, am Gefäßkörper 10 in abnehmbarer Weise befestigt.

Die erste Deckelausnehmung 21, in der der Dichtungsstopfen 40 eingesteckt ist, ist aus Sicherheitsgründen vom Deckelgriff 25 beabstandet am Deckel 20 positioniert. Außerdem ist zwischen der ersten Deckelausnehmung 21 und dem Drehgelenk 30 eine zweite Deckelausnehmung 28 als Überdruckbohrung vorgesehen.

**Fig. 6** zeigt eine vergrößerte Detailansicht des in Fig. 4 markierten Ausschnitts A.

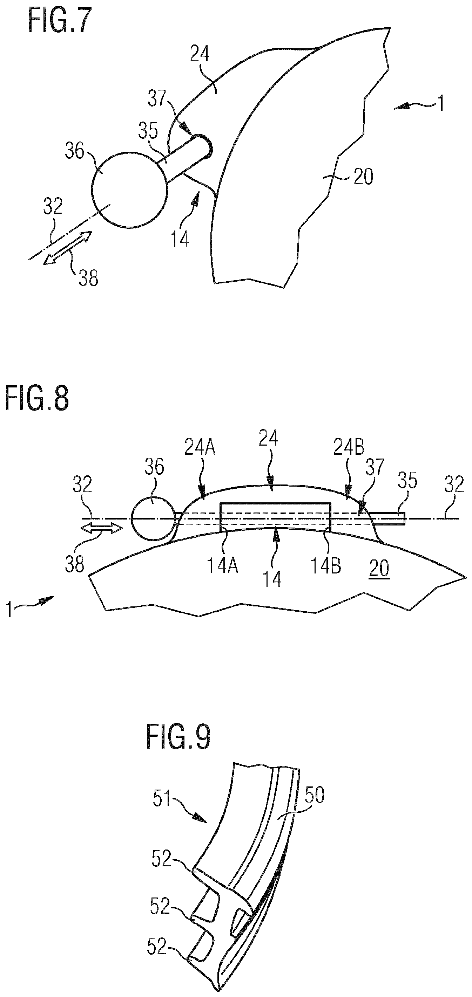

**Fig. 7** zeigt ein Detail des trennbaren Drehgelenks 30, welches als Eingelenkscharnier 33 ausgebildet ist.

**Fig. 8** zeigt in einer teilweisen Schnittansicht von oben ein Detail des in Fig. 7 gezeigten Drehgelenks 30.

In Zusammenschau der Figuren 5, 6, 7 und 8 wird nun die Funktionsweise des trennbaren Drehgelenks 30 erläutert, welches als Eingelenkscharnier 33 ausgebildet ist. Ein Gelenkvorsprung 14 am Gefäßrand 13 des Gefäßkörpers 10 ist in Längsrichtung der Gelenkachse 32 angeordnet, wobei in befestigter Lage des Deckels 20 am Gefäßkörper 10 zwei Gelenklaschenabschnitte 24A,24B einer am Deckelrand 23 angeordneten Gelenklasche 24 den Gelenkvorsprung 14 jeweils an einander gegenüberliegenden Stirnseiten 14A,14B des Gelenkvorsprungs 14 umgreifen. Eine Längsbohrung 37, die in Richtung der Drehachse 32 sowohl den Gelenkvorsprung 14, als auch die beiden Gelenklaschenabschnitte 24A,24B durchdringt, dient zur Aufnahme eines Gelenkstifts 34, welcher in eingesteckter Lage die Gelenkachse 32 bildet. Zum Einstecken des Gelenkstifts 34, welcher zur besseren Handhabung an seinem einen Ende einen Kugelgriff 36 aufweist, wird dieser in einer mit einem Doppelpfeil 38 symbolisierten Einsteckrichtung 38 in die Längsbohrung 37 eingesteckt.

Zum Zerlegen des trennbaren Drehgelenks 30 muss in dieser Ausführung bloß der Gelenkstift 34 in umgekehrter Entnahmerichtung 38 wieder aus der Längsbohrung 37 herausgezogen werden, wodurch das Drehgelenk 30 getrennt ist und der Deckel 30 entfernt werden kann. Der Gelenkstift 34 kann beispielsweise aus Edelstahl hergestellt sein mit einem wärmeisolierenden Kugelgriff 36 aus Duroplast-Kunststoff.

**Fig. 9** zeigt ein Detail der ringförmigen Deckeldichtung 50, welche als ein Dichtungsring 51 geformt ist und ein Dichtungsprofil 52 aufweist. In Fig. 6 ist die Deckeldichtung 50 in Einbaulage gezeigt. Um bei dem erfindungsgemäßen Dampfgargefäß 1 einen besonders komfortabel zu bedienenden, dicht verschließbaren Deckel 20 bereitzustellen, bei dem die Deckeldichtung 50 auch beim Öffnen und Schließen des Deckels 20 nicht verrutscht, weist der Deckel 20 an seinem Deckelrand 23 eine umlaufende Dichtungsnut 27 auf, wobei die Deckeldichtung 50 in die umlaufende Dichtungsnut 27 einsteckbar ist. Auf diese Weise wird die sichere Handhabung des Dampfgargefäßes 1 gewährleistet, da ein unkontrolliertes Austreten von heißem Dampf im Bereich der umlaufenden Deckeldichtung 50 bei geschlossenem Deckel 20 verhindert wird.

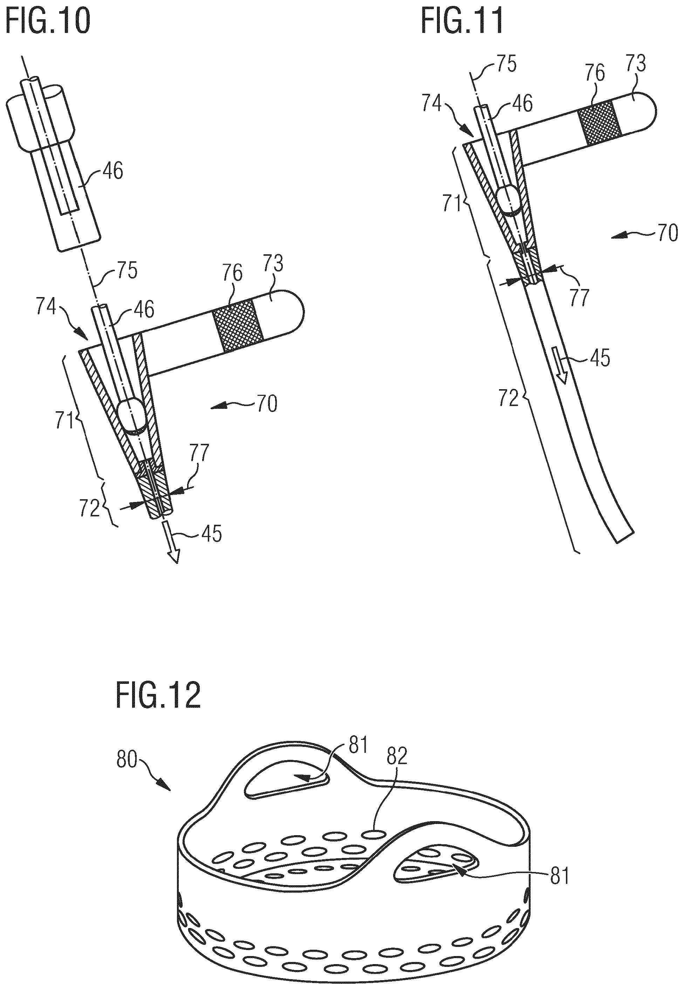

**Fig. 10** zeigt in einer Schnittansicht ein Detail eines Dampfeinblasadapters 70 mit einer ersten externen Dampfdüse 46 sowie - alternativ - mit einer weiteren, zweiten externen Dampfdüse 46, die noch nicht in Verbindung mit dem Dampfeinblasadapter 70 steht. Damit wird veranschaulicht, dass unterschiedliche, individuell geformte Dampfdüsen 46 unter Zuhilfenahme eines Dampfeinblasadapters 70 weitestgehend unabhängig von Ihrer jeweiligen Bauform und ihrem Durchmesser zur Zufuhr von heißem Dampf 45 in das Dampfgargefäß 1 verwendet werden können.

**Fig. 11** zeigt in einer Schnittansicht den in Fig. 10 gezeigten Dampfeinblasadapter 70 mit einer ersten externen Dampfdüse 46. Der Dampfeinblasadapter 70 bietet mit dem konisch geformten Trichterabschnitt 71, der an seinem freien Trichterende 74 einen größeren freien Querschnitt aufweist als die Durchgangsbohrung 42 im Dichtungsstopfen, eine komfortable Möglichkeit zum Einstecken einer externen Dampfdüse 46 einer Espressomaschine. Individuell geformte Dampfdüsen 46 bzw. Dampflanzen können somit im Wesentlichen in Achsenrichtung 75 des Trichterabschnitts 71 in diesen eingesteckt werden, um heißen Dampf 45 durch den anschließenden Schlauchabschnitt 72 hindurch in das Dampfgargefäß 1 einzuleiten. Die Dichtungsmanschette 73 kann zur Abdichtung um das freie Trichterende 74 gewickelt und mittels des daran angeordneten Verschlusses 76 bzw. des Klettverschlusses 76 fixiert werden.

**Fig. 12** zeigt einen Dämpfeinsatz 80 mit zwei Handgriffen 81 und einem Siebboden 82. Der Dämpfeinsatz 80 dient zum Auflegen von Speisenportionen und ist so geformt, dass er in das Dampfgargefäß 1 einsetzbar ist und aus diesem wieder entnommen werden kann.

### BEZUGSZEICHENLISTE

- 1: Dampfgargefäß
- 5: Rotationsachse
- 6: Innenraum des Dampfgargefäßes
- 7: Innenradius des gewölbten Deckels
- 8: Griffseite
- 9: Gelenkseite
- 10: schüsselförmiger Gefäßkörper
- 11: Innenraum des Gefäßkörpers
- 12: Innenradius des Gefäßkörpers
- 13: Gefäßrand
- 14: Gelenkvorsprung am Gefäßrand
- 14A,14B: Stirnseiten des Gelenkvorsprungs
- 15: Gefäßgriff
- 16: Länge des Gefäßgriffs
- 17: Standfläche
- 18: Sockelring
- 20: Deckel
- 21: (erste) Deckelausnehmung; Durchgangsbohrung
- 22: Durchmesser der (ersten) Deckelausnehmung
- 23: Deckelrand
- 24: Gelenklasche am Deckelrand
- 24A,24B: Gelenklaschenabschnitt am Deckelrand
- 25: Deckelgriff
- 26: Länge des Deckelgriffs
- 27: Dichtungsnut
- 28: (zweite) Deckelausnehmung; Überdruckbohrung
- 29: Durchmesser der (zweiten) Deckelausnehmung
- 30: trennbares Drehgelenk
- 31: Laschenscharnier
- 32: Gelenkachse
- 33: Drehrichtung (Doppelpfeil)
- 34: Eingelenkscharnier
- 35: Gelenkstift
- 36: Kugelgriff
- 37: Längsbohrung
- 38: Einsteck- und Entnahmerichtung (Doppelpfeil)
- 40: Dichtungsstopfen
- 41: Außenprofil
- 42: konische Durchgangsbohrung
- 43: Bohrungsachse
- 44: (kleinster) Bohrungsdurchmesser
- 45: Heißdampfzufuhr (Pfeil)
- 46: (externe) Dampfdüse; Dampflanze
- 47: Durchgangsbohrung; Überdruckbohrung
- 48: Bohrungsachse
- 49: Bohrungsdurchmesser
- 49: Bohrungsachse
- 50: Deckeldichtung
- 51: Dichtungsring
- 52: Dichtungsprofil
- 60: Standring
- 61: Innendurchmesser
- 62: Außendurchmesser
- 63: Profilabschnitt
- 70: Dampfeinblasadapter
- 71: konischer Trichterabschnitt
- 72: Schlauchabschnitt
- 73: Dichtungsmanschette
- 74: freies Ende des konischen Trichterabschnitts
- 75: Achse des Trichterabschnitts
- 76: Verschluss; Klettverschluss
- 77: Außendurchmesser des Schlauchabschnitts
- 80: Dämpfeinsatz
- 81: Handgriff
- 82: Siebboden

## Patentansprüche

1. Dampfgargefäß (1) mit einem schüsselförmigen Gefäßkörper (10) und einem mittels einer Deckeldichtung (50) mit dem Gefäßkörper (10) dicht verbindbaren Deckel (20), wobei der Deckel (20) zumindest eine Deckelausnehmung (21) aufweist und die zumindest eine Deckelausnehmung (21) dazu ausgebildet ist, um heißen Dampf (45) aus einer externen Dampfquelle (46) in das Dampfgargefäß (1) einzuleiten, wobei
am schüsselförmigen Gefäßkörper (10) ein Gefäßgriff (15) sowie am Deckel (20) ein Deckelgriff (25) angeordnet sind, wobei der Gefäßgriff (15) und der Deckelgriff (25) bei geschlossenem Deckel (20) jeweils deckungsgleich zueinander positioniert sind und jeweils an einer Griffseite (8) vom Dampfgargefäß (1) abstehen, wobei an einer der Griffseite (8) gegenüberliegenden Gelenkseite (9) des Dampfgargefäßes (1) der Deckel (20) mit einem trennbaren Drehgelenk (30) um eine Gelenkachse (32) drehbar beweglich (33) am Gefäßkörper (10) befestigbar ist,
**dadurch gekennzeichnet, dass** die zumindest eine Deckelausnehmung (21) vom Deckelgriff (25) beabstandet am Deckel (20) positioniert ist und im Betrieb des Dampfgargefäßes (1) in der zumindest einen Deckelausnehmung (21) ein Dichtungsstopfen (40) mit einer sich in Richtung zum Innenraum (6) des Dampfgargefäßes (1) konisch verjüngenden Durchgangsbohrung (42) eingesteckt ist.

2. Dampfgargefäß (1) nach Anspruch 1, **dadurch gekennzeichnet, dass** wahlweise der Deckel (20) eine zweite Deckelausnehmung (28) oder der in die zumindest eine Deckelausnehmung (21) eingesteckte Dichtungsstopfen (40) eine zweite Durchgangsbohrung (47) aufweisen, wobei die zweite Deckelausnehmung (28) oder die zweite Durchgangsbohrung (47) im Dichtungsstopfen (40) jeweils als Überdruckbohrung ausgebildet sind, um im Betrieb überschüssigen Heißdampf aus dem Innenraum (6) des Dampfgargefäßes (1) abzuführen.

3. Dampfgargefäß (1) nach Anspruch 1 oder 2, **dadurch gekennzeichnet, dass** das trennbare Drehgelenk (30) als Laschenscharnier (31) ausgebildet ist, wobei ein Gelenkvorsprung (14) an einem Gefäßrand (13) des Gefäßkörpers (10) die Gelenkachse (32) bildet, und wobei in befestigter Lage des Deckels (20) am Gefäßkörper (10) eine Gelenklasche (24) am Deckelrand (23) den Gelenkvorsprung (14) drehbar beweglich umgreift.

4. Dampfgargefäß (1) nach Anspruch 1 oder 2, **dadurch gekennzeichnet, dass** das trennbare Drehgelenk (30) als Eingelenkscharnier (33) ausgebildet ist, wobei ein Gelenkvorsprung (14) am Gefäßrand (13) des Gefäßkörpers (10) in Längsrichtung der Gelenkachse (32) angeordnet ist, und wobei in befestigter Lage des Deckels (20) am Gefäßkörper (10) zwei Gelenklaschenabschnitte (24A,24B) einer am Deckelrand (23) angeordneten Gelenklasche (24) den Gelenkvorsprung (14) jeweils an einander gegenüberliegenden Stirnseiten (14A,14B) des Gelenkvorsprungs (14) umgreifen, wobei eine Längsbohrung (37) in Richtung der Drehachse (32) sowohl den Gelenkvorsprung (14), als auch die beiden Gelenklaschenabschnitte (24A,24B) durchdringt, und wobei in der Längsbohrung (37) ein Gelenkstift (34), welcher die Gelenkachse (32) bildet, eingesteckt ist.

5. Dampfgargefäß (1) nach einem der Ansprüche 1 bis 4, **dadurch gekennzeichnet, dass** der Gefäßkörper (10) und der Deckel (20) aus einem Duroplast-Kunststoff hergestellt sind und/oder der Dichtungsstopfen (40) und die Deckeldichtung (50) aus Silikon hergestellt sind.

6. System umfassend ein Dampfgargefäß (1) nach einem der Ansprüche 1 bis 5, weiterhin umfassend einen Standring (60), wobei ein Profilabschnitt (63) des Standrings (60) komplementär zu einem Außenflächenabschnitt des schüsselförmigen Gefäßkörpers (10) geformt ist.

7. System umfassend ein Dampfgargefäß (1) nach einem der Ansprüche 1 bis 5, weiterhin umfassend einen Dämpfeinsatz (80) mit einem Siebboden (82), der in das Dampfgargefäß (1) einsetzbar ist.

8. System umfassend ein Dampfgargefäß (1) nach einem der Ansprüche 1 bis 5, weiterhin umfassend einen Dampfeinblasadapter (70), wobei der Dampfeinblasadapter (70) einen konisch geformten Trichterabschnitt (71) mit einem freien Trichterende (74) zum Einstecken einer Dampfdüse (46) aufweist sowie einen an den konischen Trichterabschnitt (71) anschließenden Schlauchabschnitt (72), der dazu ausgebildet ist, um durch die Deckelausnehmung (21) hindurch heißen Dampf (45) aus einer externen Dampfquelle (46) in das Dampfgargefäß (1) einzuleiten.

9. System umfassend ein Dampfgargefäß (1) nach einem der Ansprüche 1 bis 5, weiterhin umfassend eine Espressomaschine mit einer Dampfdüse (46), wobei die Dampfdüse (46) dazu ausgebildet ist, um heißen Dampf zum Einleiten in das Dampfgargefäß (1) bereitzustellen.

## Claims

1. A steam cooking vessel (1) comprising a bowl-shaped vessel body (10) and a lid (20) that can be sealingly connected to the vessel body (10) by means of a lid gasket (50), the lid (20) having at least one lid recess (21) and the at least one lid recess (21) being designed to direct hot steam (45) from an external steam source (46) into the steam cooking vessel (1),
a vessel handle (15) being arranged on the bowl-shaped vessel body (10) and
a lid handle (25) being arranged on the lid (20), the vessel handle (15) and the lid handle (25) each being positioned in alignment with one another when the lid (20) is closed and each protruding from the steam cooking vessel (1) on a handle side (8), and the lid (20), on a joint side (9) of the steam cooking vessel (1) located opposite the handle side (8), being attachable to the vessel body (10) by way of a detachable swivel joint (30) so as to be rotatable (33) about a joint axis (32),
**characterized in that** the at least one lid recess (21) is positioned on the lid (20) at a distance from the lid handle (25) and, during operation of the steam cooking vessel (1), a sealing plug (40) having a through-bore (42) that tapers conically toward an interior (6) of the steam cooking vessel (1) is inserted into the at least one lid recess (21).

2. The steam cooking vessel (1) according to claim 1, **characterized in that** either the lid (20) has a second lid recess (28) or the sealing plug (40) inserted into the at least one lid recess (21) has a second through-hole (47), the second lid recess (28) or the second through-hole (47) in the sealing plug (40) each being designed as a pressure relief hole to vent excess hot steam from the interior (6) of the steam cooking vessel (1) during operation.

3. The steam cooking vessel (1) according to claim 1 or 2, **characterized in that** the detachable swivel joint (30) is designed as a tab hinge (31), a joint protrusion (14) on a vessel rim (13) of the vessel body (10) forming the joint axis (32), and, when the lid (20) is attached to the vessel body (10), a joint tab (24) on a lid rim (23) rotatably surrounding the joint protrusion (14).

4. The steam cooking vessel (1) according to claim 1 or 2, **characterized in that** the detachable swivel joint (30) is designed as a single-joint hinge (33), a joint protrusion (14) on a vessel rim (13) of the vessel body (10) being arranged in the longitudinal direction of the joint axis (32); and, when the lid (20) is attached to the vessel body (10), two joint tab sections (24A, 24B) of a joint tab (24) that is arranged at a lid rim (23) each surrounding the joint protrusion (14) on opposite end faces (14A, 14B) of the joint protrusion (14); a longitudinal borehole (37) extending through both the joint protrusion (14) and the two joint tab sections (24A, 24B) in the direction of the rotational axis (32); and a pivot pin (34), which forms the joint axis (32), being inserted into the longitudinal borehole (37).

5. The steam cooking vessel (1) according to any one of claims 1 to 4, **characterized in that** the vessel body (10) and the lid (20) are made of a thermoset plastic and/or the sealing plug (40) and the lid gasket (50) are made of silicone.

6. A system comprising a steam cooking vessel (1) according to any one of claims 1 to 5, furthermore comprising a support ring (60), wherein a profile section (63) of the support ring (60) is shaped in a manner that is complementary to an outer surface section of the bowl-shaped vessel body (10).

7. A system comprising a steam cooking vessel (1) according to any one of claims 1 to 5, furthermore comprising a steam insert (80) having a perforated bottom (82) which can be inserted into the steam cooking vessel (1).

8. A system comprising a steam cooking vessel (1) according to any one of claims 1 to 5, furthermore comprising a steam injection adapter (70), wherein the steam injection adapter (70) comprises a conically shaped funnel section (71) having a free funnel end (74) for inserting a steam nozzle (46), as well as a hose section (72) adjoining the conical funnel section (71), which is designed to introduce hot steam (45) from an external steam source (46) through the lid recess (21) into the steam cooking vessel (1).

9. A system comprising a steam cooking vessel (1) according to any one of claims 1 to 5, furthermore comprising an espresso machine including a steam nozzle (46), wherein the steam nozzle (46) is designed to supply hot steam for introduction into the steam cooking vessel (1).

## Revendications

1. Récipient de cuisson à vapeur (1) comprenant un corps de récipient en forme de bol (10) et un couvercle (20) qui peut être relié de manière étanche au corps de récipient (10) au moyen d'un joint statique de couvercle (50), le couvercle (20) ayant au moins un évidement de couvercle (21) et l'au moins un évidement de couvercle (21) étant conçu pour diriger de la vapeur chaude (45) depuis une source de vapeur externe (46) dans le récipient de cuisson à vapeur (1),
une poignée de récipient (15) étant agencée sur le corps de récipient en forme de bol (10) et
une poignée de récipient (25) étant agencée sur le couvercle (20), la poignée de récipient (15) et la poignée de couvercle (25) étant chacune positionnées alignées l'une avec l'autre lorsque le couvercle (20) est fermé et chacune faisant saillie depuis le récipient de cuisson à vapeur (1) sur un côté poignée (8), et le couvercle (20), sur un côté articulation (9) du récipient de cuisson à vapeur (1) situé à l'opposé du côté poignée (8), pouvant être attaché au corps de récipient (10) au moyen d'une rotule détachable (30) de sorte à pouvoir tourner (33) autour d'un axe d'articulation (32),
**caractérisé en ce que** l'au moins un évidement de couvercle (21) est positionné sur le couvercle (20) à une distance depuis la poignée de couvercle (25) et, pendant le fonctionnement du récipient de cuisson à vapeur (1), un bouchon d'étanchéité (40) ayant un orifice traversant (42) qui s'effile de manière conique vers l'intérieur (6) du récipient de cuisson à vapeur (1) est inséré dans l'au moins un évidement de couvercle (21).

2. Récipient de cuisson à vapeur (1) selon la revendication 1, **caractérisé en ce que** soit le couvercle (20) a un second évidement de couvercle (28) soit le bouchon d'étanchéité (40) inséré dans l'au moins un évidement de couvercle (21) a un second orifice traversant (47), le second évidement de couvercle (28) ou le second orifice traversant (47) dans le bouchon d'étanchéité (40) étant chacun conçu en tant qu'orifice de détente pour évacuer la vapeur chaude en excès de l'intérieur (6) du récipient de cuisson à vapeur (1) pendant le fonctionnement.

3. Récipient de cuisson à vapeur (1) selon la revendication 1 ou 2, **caractérisé en ce que** la rotule détachable (30) est conçue en tant que charnière à languette (31), une saillie d'articulation (14) sur une bordure de récipient (13) du corps de récipient (10) formant l'axe d'articulation (32), et, lorsque le couvercle (20) est attaché au corps de récipient (10), une languette d'articulation (24) sur la bordure du couvercle (23) entourant en rotation la saillie d'articulation (14).

4. Récipient de cuisson à vapeur (1) selon la revendication 1 ou 2, **caractérisé en ce que** la rotule détachable (30) est conçue en tant que charnière à articulation unique (33), une saillie d'articulation (14) sur la bordure de récipient (13) du corps de récipient (10) étant agencée dans la direction longitudinale de l'axe
d'articulation (32) ; et, lorsque le couvercle (20) est attaché au corps de récipient (10), deux sections de languette d'articulation (24A, 24B) d'une languette d'articulation (24) qui est agencée au niveau de la bordure de couvercle (23) entourant chacune la saillie d'articulation (14) sur des faces d'extrémité opposée (14A, 14B) de la saillie d'articulation (14) ; un orifice de perçage longitudinal (37) s'étendant à la fois à travers la saillie d'articulation (14) et les deux sections de languette d'articulation (24A, 24B) dans la direction de l'axe de rotation (32) ; et une broche pivot (34), qui forme l'axe d'articulation (32), étant insérée dans l'orifice de perçage longitudinal (37).

5. Récipient de cuisson à vapeur (1) selon l'une quelconque des revendications 1 à 4, **caractérisé en ce que** le corps de récipient (10) et le couvercle (20) sont fabriqués en un plastique thermodurci et/ou le bouchon d'étanchéité (40) et le joint statique de couvercle (50) sont fabriqués en silicone.

6. Système comprenant un récipient de cuisson à vapeur (1) selon l'une quelconque des revendications 1 à 5, comprenant en outre une bague de soutien (60), dans lequel une section de profil (63) de la bague de soutien (60) est formée d'une manière qui est complémentaire d'une section de surface externe du corps de récipient en forme de bol (10).

7. Système comprenant un récipient de cuisson à vapeur (1) selon l'une quelconque des revendications 1 à 5, comprenant en outre un panier à vapeur (80) ayant un fond perforé (82) qui peut être inséré dans le récipient de cuisson à vapeur (1).

8. Système comprenant un récipient de cuisson à vapeur (1) selon l'une quelconque des revendications 1 à 5, comprenant en outre un adaptateur d'injection de vapeur (70), dans lequel l'adaptateur d'injection de vapeur (70) comprend une section d'entonnoir de forme conique (71) ayant une extrémité d'entonnoir libre (74) pour insérer une buse de vapeur (46), ainsi qu'une section de tuyau flexible (72) adjacente à la section d'entonnoir conique (71), qui est conçue pour introduire de la vapeur chaude (45) depuis une source de vapeur externe (46) à travers l'évidement de couvercle (21) dans le récipient de cuisson à vapeur (1).

9. Système comprenant un récipient de cuisson à vapeur (1) selon l'une quelconque des revendications 1 à 5, comprenant en outre une machine à expresso incluant une buse de vapeur (46), dans lequel la buse de vapeur (46) est conçue pour fournir de la vapeur chaude pour introduction dans le récipient de cuisson à vapeur (1).
